# EUROPEAN PATENT SPECIFICATION

(11) **EP 3 876 675 B1**
(45) Date of publication and mention of the grant of the patent: **31.08.2022**
(21) Application number: 20177449.4
(22) Date of filing: 29.05.2020
(51) Int. Cl.: H05B 45/10, H05B 45/20, H05B 47/19, H05B 47/115

(54) **LIGHTING APPARATUS**
BELEUCHTUNGSVORRICHTUNG
APPAREIL D'ÉCLAIRAGE

(30) Priority: 05.03.2020 CN 202010147804
(43) Date of publication of application: 08.09.2021
(73) Proprietor: LEEDARSON LIGHTING CO., LTD., Changtai, Zhangzhou Fujian 363999 (CN)
(72) Inventor: Huang, Wenchang, Zhangzhou, Fujian 363999 (CN); Lin, Hongbin, Zhangzhou, Fujian 363999 (CN); Zhang, Conghe, Zhangzhou, Fujian 363999 (CN)
(74) Representative: Dilg, Haeusler, Schindelmann Patentanwaltsgesellschaft mbH

(56) References cited:
- EP-A1- 2 149 749
- WO-A1-2005/003625
- WO-A1-2015/079350
- WO-A1-2016/097929
- WO-A2-2011/015975
- CN-A- 109 990 211
- US-A1- 2016 286 616

## Description

### FIELD

The present application is related to a lighting apparatus and more particularly related to a lighting apparatus with adjustable parameters. In particular the invention relates to a lighting apparatus according to claim 1. Preferred embodiments of the invention are included in the dependent claims.

### BACKGROUND

Electroluminescence, an optical and electrical phenomenon, was discovered in 1907. Electroluminescence refers the process when a material emits light when a passage of an electric field or current occurs. LED stands for light-emitting diode. The very first LED was reported being created in 1927 by a Russian inventor. During decades' development, the first practical LED was found in 1961, and was issued patent by the U.S. patent office in 1962. In the second half of 1962, the first commercial LED product emitting low-intensity infrared light was introduced. The first visible-spectrum LED, which limited to red, was then developed in 1962.

After the invention of LEDs, the neon indicator and incandescent lamps are gradually replaced. However, the cost of initial commercial LEDs was extremely high, making them rare to be applied for practical use. Also, LEDs only illuminated red light at early stage. The brightness of the light only could be used as indicator for it was too dark to illuminate an area. Unlike modern LEDs which are bound in transparent plastic cases, LEDs in early stage were packed in metal cases.

With high light output, LEDs are available across the visible, infrared wavelengths, and ultraviolet lighting fixtures. Recently, there is a high-output white light LED. And this kind of high-output white light LEDs are suitable for room and outdoor area lighting. Having led to new displays and sensors, LEDs are now be used in advertising, traffic signals, medical devices, camera flashes, lighted wallpaper, aviation lighting, horticultural grow lights, and automotive headlamps. Also, they are used in cellphones to show messages.

For example, WO2005003625A1 relates to an Edison-style light bulb which supports a plurality of light emitting diodes (LEDs) and an illumination source, wherein a switch circuit is connected to control the supply of electrical power to the first and second electric circuits to adjust and coordinate the light output from the LEDs and from the illumination source.

A Fluorescent lamp refers to a gas-discharge lamps. The invention of fluorescent lamps, which are also called fluorescent tubes, can be traced back to hundreds of years ago. Being invented by Thomas Edison in 1896, fluorescent lamps used calcium tungstate as the substance to fluoresce then. In 1939, they were firstly introduced to the market as commercial products with variety of types.

In a fluorescent lamp tube, there is a mix of mercury vapor, xenon, argon, and neon, or krypton. A fluorescent coating coats on the inner wall of the lamp. The fluorescent coating is made of blends of rare-earth phosphor and metallic salts. Normally, the electrodes of the lamp comprise coiled tungsten. The electrodes are also coated with strontium, calcium oxides and barium. An internal opaque reflector can be found in some fluorescent lamps. Normally, the shape of the light tubes is straight. Sometimes, the light tubes are made circle for special usages. Also, u-shaped tubes are seen to provide light for more compact areas.

Because there is mercury in fluorescent lamps, it is likely that the mercury contaminates the environment after the lamps are broken. Electromagnetic ballasts in fluorescent lamps are capable of producing buzzing mouse. Radio frequency interference is likely to be made by old fluorescent lamps. The operation of fluorescent lamps requires specific temperature, which is best around room temperature. If the lamps are placed in places with too low or high temperature, the efficacy of the lamps decreases.

In real lighting device design, details are critical no matter how small they appear. For example, to fix two components together conveniently usually brings large technical effect in the field of light device particularly when any such design involves a very large number of products to be sold around the world.

On the other hand, when wireless technology keeps advancing, various network technologies are developed. More and more devices are connected smartly with wire or wireless networks. Control messages today are conveniently to be transmitted among devices so as device are capable of being operated together to complete a complicated task or help people life more smartly.

Before the new technology replaces every traditional designs, it is important and helpful to provide a flexible way to integrate the most advanced loT (Internet of Things) technology with traditional design, like a wall switch for controlling a connected light device.

When lighting technology is getting fast development, people also increase their expectation and needs. For example, people would like to adjust various parameters of an output light. Therefore, it is critical to find out a way to conveniently adjust parameters of a lighting apparatus.

### SUMMARY

In some embodiments, a lighting apparatus includes a light source module, a light style switch, a driver circuit and a light style unit.

The light source module has multiple types of LED modules. Each type of LED modules may have different number of LED modules. The difference among types of LED modules include color temperatures, colors, luminance levels, light beam angle, color rendering indices, and/or other parameters.

By controlling luminance levels of different types of LED modules, various mixed parameters may be provided when the driver circuit controls the light source module according to the parameters of the type parameters of the LED modules.

The light style switch is used for selecting from a set of predetermined light styles. Each predetermined light style corresponds to multiple parameters of a output light to be generated by the light source module.

The light style unit is connected to the light style switch for providing the multiple parameters corresponding to the selected predetermined light style to the driver circuit to generate a corresponding control signal to control the light source module.

The driver circuit comprises a user detector, wherein if the user detector finds that a user is not nearby, less used LED modules of the multiple types of LED modules are turned on to replace more often used LED modules of the multiple types of LED modules to increase an overall life span of the light source module.

In some embodiments, the lighting apparatus may also include a housing for enclosing the light source module, the driver circuit and the light style unit, a surface of the housing is used for disposing the light style switch with multiple options manually selectable by a user, each option being associated to one predetermined light style.

In some embodiments, there is no other option for light style selection on the housing except the light style switch.

In some embodiments, the lighting apparatus may also include a wireless module for receiving an external command, wherein the external command correspond to one of the predetermined light styles, the driver circuit suppresses the manually selected predetermined light style from the light style switch and uses the predetermined light style indicated by the external command to control the light source module.

In some embodiments, the lighting apparatus may also include a wall switch decoder for decoding an operation from a wall switch connecting to the lighting apparatus.

In some embodiments, the operation of the wall switch provides wall switch parameters overlapping the multiple parameters of the selected predetermined light style.

In some embodiments, the operation of the wall switch provides wall switch parameters for reference on adjusting the multiple parameters of the selected predetermined light style.

In some embodiments, the lighting apparatus may also include a multiplexer for receiving multiple control sources, wherein one of the multiple control sources is a selection for the light style switch.

In some embodiments, a priority list for the multiple control sources is configured for determining how to use parameters corresponding to the multiple control sources.

In some embodiments, one option of the light style switch is used for mapping other options of the light style switch to different parameters.

In some embodiments, there is a light indicator showing a selected option of the light style switch.

In some embodiments, the multiple parameters include a color rendering index, a light beam angle, a color temperature, a color and a luminance level.

In some embodiments, an external device sends an external command with new parameters for replacing the multiple parameters of the selected option of the light style switch.

In some embodiments, the lighting apparatus may also include a wireless module for transmitting the multiple parameters of the selected light style to a neighboring lighting apparatus.

In some embodiments, the driver circuit updates the multiple parameters of the selected light style according to an external command with new parameters and stores updated multiple parameters of the light style in future use.

In some embodiments, the set of predetermined light style correspond to different types of objects to be projected.

In some embodiments, the lighting apparatus may also include a light detector for detecting an environment parameter and uses the environment parameter to adjust the multiple parameters of the selected light style.

In some embodiments, the multiple parameters of the selected light style are adjusted according to a current time.

For example, the multiple parameters of the selected light style in the morning are different from the multiple parameters in the afternoon or night, even the parameters are corresponding to the same selected light style.

In some embodiments, the multiple parameters of the selected light style are adjusted according a detected user identity.

### BRIEF DESCRIPTION OF DRAWINGS

Fig. 1 illustrates a diagram structure in an embodiment.
Fig. 2 illustrates another view of an embodiment.
Fig. 3 illustrates a light bulb embodiment.
Fig. 4 illustrates an embodiment.
Fig. 5 illustrates another embodiment.
Fig. 6 illustrates another embodiment.
Fig. 7 illustrates a structure diagram of an embodiment.
Fig. 8A and Fig. 8B show two options in a light style switch example.
Fig. 9 illustrates multiple control sources.

### DETAILED DESCRIPTION

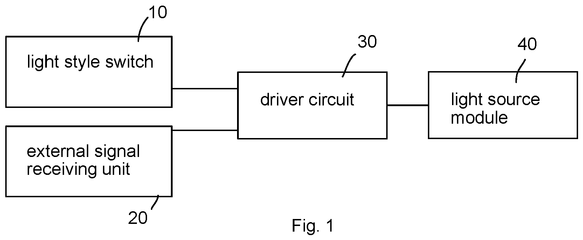

Please refer to Fig. 1, a lighting apparatus is provided. The lighting apparatus has a light source module 40, a light style mode switching module 10, an external signal receiving unit 20 and a driver circuit 30. The light style mode switching module 10 is used for producing a light style switching signal. The external signal receiving unit 20 is used for receiving and transferring a light style control signal. The driver circuit 30 connects respectively with the external signal receiving unit 20, the light style mode switching module 10 and the light source module 40. The driver circuit 30 is used for receiving the light style control signal and the light style switching signal. The driver circuit 30 is further capable of producing a corresponding light driving signal according to the light style control signal and the light style switching signal to adjust the light style of the light source module 40.

In this embodiment, the light style of the lighting apparatus has a color temperature, a light passing, a light beam angle and a color rendering index. The light style mode switching module 10 produces the light style switching signal. The driver circuit 30 produces the corresponding light driving signal according to the light style switching signal. The light source module 40 lights up according to the light driving signal. More particularly, the light style mode switching module 10 is capable of having at least two light style switching units. Every light style switching unit has at least two switching levels. For example, the light style mode switching module 10 has at least two of a color temperature switching unit 112, a luminance level switching unit 122, a light beam angle switching unit 132 and a color rendering index switching unit 142. The switching units mentioned all have at least two switching levels. When the color temperature switching unit 112 is switched from a first level to a second level, the light style mode switching module 10 produces the corresponding light style switching signal. And, the driver circuit 30 adjusts the color temperature of the light source module 40 according to the light style switching signal. The color temperature of the light source module 40 presents according to the corresponding color temperature of the second level. And so forth for the function of other switching units.

Further, the light style mode switching module 10 is set on the lighting apparatus. For example, the lighting apparatus is capable of being a LED light body; thus, the light style mode switching module 10 is set on the LED light body. When specific light style of one of the switching units is needed, toggle the level to the corresponding level. Therefore, the lighting apparatus connecting with the electric supply is capable of presenting the corresponding light style according to the level. The light style of the lighting apparatus is capable of being adjusted during the installation process through the adjustment of the levels.

Further, in one embodiment, the external signal receiving unit 20 is capable of receiving and transferring the light style control signal when the lighting apparatus connects with the electric supply. And, the driver circuit 30 receives the light style control signal, and produces the corresponding light driving signal according to the light style control signal to adjust the light style of the light source module 40. For example, the external signal receiving unit 20 connects with a wall switch. The wall switch is capable of being controlled to produce the corresponding light style control signal to the external signal receiving unit 20. Therefore, the adjustment of the light style of the lighting apparatus does not need to be achieved from the light source module 40.

In an embodiment, the external signal receiving unit 20 is used for receiving external command before receiving the light style control signal, and further transferring the external command to the driver circuit 30. The driver circuit 30 is used for detecting the external command. If the external command is a determined threshold signal, the driver circuit 30 then produces the light driving signal according to the light style control signal. If the external command is not the determined threshold signal, the driver circuit 30 then discards the light style control signal.

In this embodiment, when the light style is adjusted through the light style mode switching module 10, the external signal receiving unit 20 meanwhile transfers the light style control signal to the driver circuit 30; therefore, the operation of the lighting apparatus is disturbed. In this embodiment, to prevent the driver circuit 30 from being disturbed by the light style control signal transferred by the external signal receiving unit 20, the external signal receiving unit 20 is also used for receiving external command before receiving the light style control signal, and further transferring the external command to the driver circuit 30. The driver circuit 30 detects the external command. If the external command is the determined threshold signal, the driver circuit 30 then receives the light style control signal transferred by the external signal receiving unit 20 and produces the corresponding light driving signal according to the light style control signal. If the external command is not the determined threshold signal, the driver circuit 30 then discards the light style control signal transferred by the external signal receiving unit 20.

In an embodiment, the external signal receiving unit 20 connects with the wall switch. When the lighting apparatus connects with the electric supply, the signal detection of the driver circuit 30 to the external signal receiving unit 20 is capable of being achieved through the regular control on the wall switch. For example, the determined threshold signal is turning on the wall switch three times in two seconds and waiting. After receiving the signal, the driver circuit 30 gives feedback signal; for example, the display light on the wall switch continually turns on and off three times. Then, the external command is the light style control signal transferred by the external signal receiving unit 20 to the driver circuit 30. The driver circuit 30 further produces the corresponding light driving signal according to the light style control signal.

Further, after receiving the determined threshold signal, the driver circuit 30 drives the light source module 40 to lights up according to the determined frequency to show that the lighting apparatus is controlled by the wall switch. For example, the driver circuit 30 drives the light source module 40 to continually lights on and off in two seconds to show the lighting apparatus is controlled by the wall switch.

In one embodiment, the driver circuit 30 is capable of setting the operation mode according to the external command is the determined threshold signal or not. More particularly, the operation mode includes a manual switching mode and a wall switch switching mode. When the external command is the determined threshold signal, the driver circuit 30 automatically switches to the wall switch switching mode. Then, the light style of the light source module 40 is capable of being switched through the wall switch. The light style includes the color temperature, the light passing and the light beam angle. For instance, once the wall switch is pressed, the driver circuit 30 receives the instruction and orderly switches the color temperature, the light passing or the light beam angle according to the determined switching order. Also, the brightness is capable of being adjusted by a dimmer while the light style is adjusted.

Further, the wall switch is also capable of being a display screen or a control device receiving the instruction sent by mobile phones. The parameter being corresponding to the light style is capable of being set on the display screen or the mobile phones. Further, the light style control signal is capable of being sent to the external signal receiving unit 20.

In an embodiment, the driver circuit 30 is also used for shielding the light style control signal when receiving the light style control signal and the light style switching signal. And, the driver circuit 30 produces the corresponding light driving signal according to the light style switching signal to adjust the light style of the light source module 40.

In this embodiment, if the driver circuit 30 receives the light style control signal and the light style switching signal at the same time, the driver circuit 30 chooses to shield the light style control signal and produces the corresponding light driving signal according to the light style switching signal to adjust the light style of the light source module 40. Therefore, when the light source module is tested, the disturbance to the light source module 40 from the remote control is prevented.

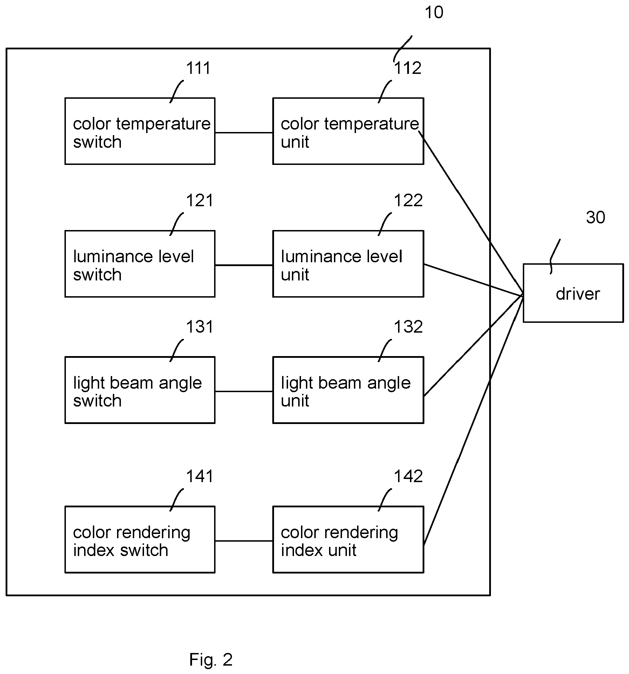

Please refer to Fig. 2 for an embodiment. The light style mode switching module 10 has a color temperature switch 111, a luminance level switch 121, a light beam angle switch 131, a color rendering index switch 141, the color temperature switching unit 112, the luminance level switching unit 122, the light beam angle switching unit 132 and the color rendering index switching unit 142. The color temperature switch 111 is used for producing a first color temperature switching signal. The luminance level switch 121 is used for producing a first luminance level switching signal. The light beam angle switch 131 is used for producing a first light beam angle switching signal. The color rendering index switch 141 is used for producing a first color rendering index switching signal.

More particularly, in this embodiment, the color temperature switching unit 112 connects with the color temperature switch 111 and is used for receiving the first color temperature switching signal. Further, the color temperature switching unit 112 produces a first color temperature adjusting signal according to the first color temperature switching signal. The driver circuit 30 adjusts the color temperature of the light source module 40 according to the first color temperature adjusting signal. The luminance level switching unit 122 connects with the luminance level switch 121 and is used for receiving the first luminance level switching signal. Further, the luminance level switching unit 122 produces a first light passing adjusting signal according to the first luminance level switching signal. The driver circuit 30 adjusts the light passing of the light source module 40 according to the first light passing adjusting signal. The light beam angle switching unit 132 connects with the light beam angle switch 131 and is used for receiving the first light beam angle switching signal. Further, the light beam angle switching unit 132 produces a first light beam angle adjusting signal according to the first light beam angle switching signal. The driver circuit 30 adjusts the light beam angle of the light source module 40 according to the first light beam angle adjusting signal. The color rendering index switching unit 142 connects with the color rendering index switch 141 and is used for receiving the first color rendering index switching signal. Further, the color rendering index switching unit 142 produces a first color rendering index adjusting signal according to the first color rendering index switching signal. The driver circuit 30 adjusts the color rendering index of the light source module 40 according to the first color rendering index adjusting signal.

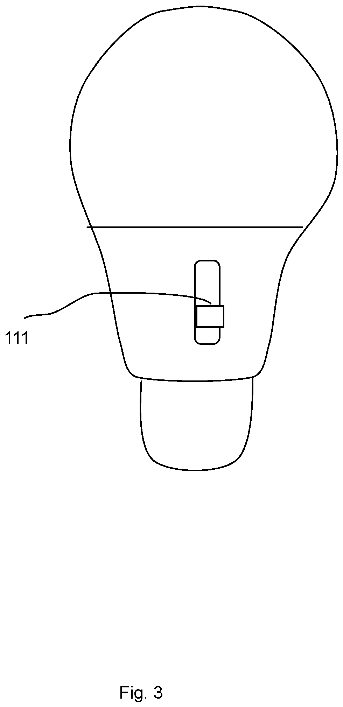

More particularly, please refer to Fig. 3. The lighting apparatus has the color temperature switch 111. The color temperature switch 111 has three color temperature levels, a color temperature 1, a color temperature 2 and a color temperature 3. The color temperature switch 111 is capable of being toggled to the corresponding color temperature levels to produce the corresponding first color temperature switching signal. The color temperature switching unit 112 connects with the color temperature switch 111 and is used for receiving the first color temperature switching signal. Further, the color temperature switching unit 112 produces the first color temperature adjusting signal according to the first color temperature switching signal. The first color temperature adjusting signal is the light style switching signal produced by the light style mode switching module 10. The driver circuit 30 adjusts the color temperature of the light source module 40 according to the light style switching signal. And so forth for the other switches and switching units.

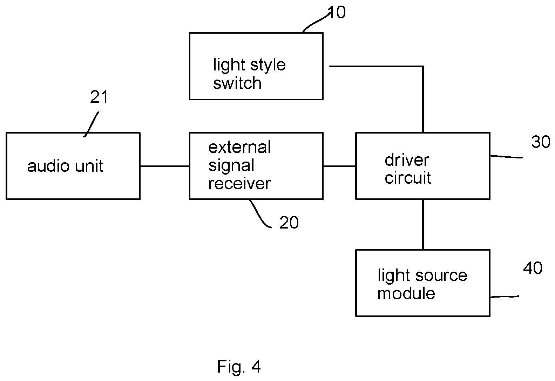

Please refer to Fig. 4 for and embodiment. The lighting apparatus further has an audio controlling device 21. The audio controlling device 21 connects with the external signal receiving unit 20 and is used for collecting voice signal. The audio controlling device 21 further produces the corresponding light style control signal according to the voice signal.

In this embodiment, the audio controlling device 21 collects the voice signal in the environment. If the voice signal is the determined voice instruction signal, the audio controlling device 21 produces the corresponding light style control signal according to the voice instruction signal. For instance, the voice instruction signal "adjust the color temperature to the first level" is delivered, the audio controlling device 21 produces the corresponding color temperature control signal to the external signal receiving unit 20 according to the voice instruction signal to adjust the color temperature of the light source module 40 to first color temperature level.

In an embodiment, the external signal receiving unit 20 is also used for detecting the voice signal before receiving the determined voice instruction signal. If the external signal receiving unit 20 receives the determined switching threshold signal before receiving the determined voice instruction signal, the external signal receiving unit 20 then transfers the light style control signal sent by the audio controlling device 21 to the driver circuit 30 or shields the light style signal sent by the audio controlling device 21.

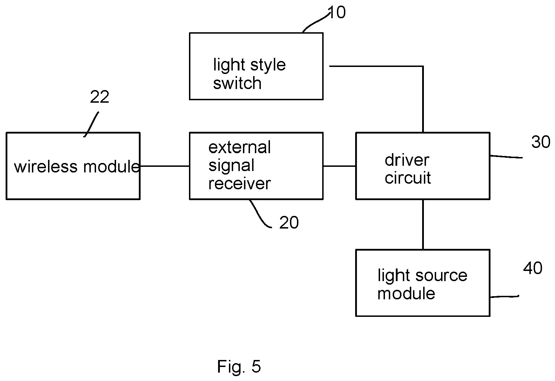

Please refer to Fig. 5 for and embodiment. The lighting apparatus further has a wireless module 22. The wireless module 22 connects with the external signal receiving unit 20 and is used for receiving wireless control signal. The wireless module 22 further produces the corresponding light style control signal according to the wireless control signal.

In this embodiment, the wireless module 22 is used for receiving the external command sent by the remote controls and producing the corresponding light style control signal according to the external command. For instance, the external command "adjust the color temperature to the first level" is delivered through the remote control, the wireless module 22 produces the corresponding color temperature control signal to the external signal receiving unit 20 according to the external command to adjust the color temperature of the light source module 40 to first color temperature level.

In an embodiment, the external signal receiving unit 20 is also used for detecting the signal delivered by the wireless module 22 before receiving the determined external command. If the external signal receiving unit 20 receives the determined switching threshold signal before receiving the determined external command, the external signal receiving unit 20 then transfers the light style control signal sent by the wireless module 22 to the driver circuit 30 or shields the light style signal sent by the wireless module 22.

In an embodiment, the external signal receiving unit 20 has a plurality of the external signal input passage. The external signal receiving unit 20 makes sure an operation signal input passage based on the switching threshold signal inputted by every external signal input passage. The operation signal input passage is used for transferring the light style control signal to the driver circuit 30.

In this embodiment, if the signal inputted by every external signal input passage is the corresponding switching threshold signal of the external signal input passage, then the external signal input passage is set as the operation signal input passage, and the light style control signal inputted by the operation signal input passage is transferred to the driver circuit 30. If the signal inputted by other external signal input passages is the corresponding switching threshold signal of the external signal input passage, then the operation signal input passage is set as the external signal input passage. For instance, a plurality of the external signal input passage is capable of including a remote control signal input passage, a voice control input passage, a wall switch signal input passage. When the signal inputted by the remote control signal input passage is the switching threshold signal of the remote control, the remote control signal input passage is set as the operation signal input passage. The signal inputted by the remote control signal input passage is capable of being the light style control signal transferred to the driver circuit 30. The signal of other external signal input passages is not capable of being transferred to the driver circuit 30. If the signal inputted by the voice control input passage is the voice control switching threshold signal, then the voice control input passage is set as the operation signal input passage. And, the signal inputted by the voice control input passage is capable of being the light style control signal transferred to the driver circuit 30. The signal of other external signal input passages is not capable of being transferred to the driver circuit 30, and so forth.

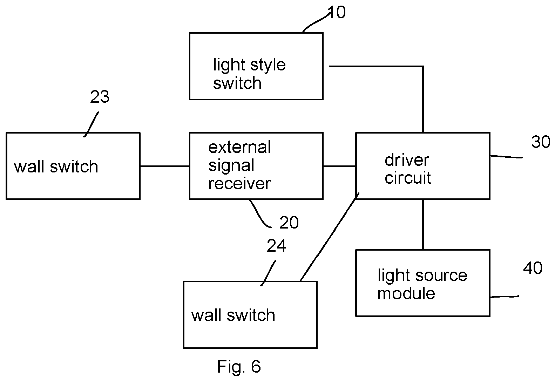

Please refer to Fig. 6 for an embodiment. A light system provided has a wall switch 23. Being similar to the lighting apparatus in either of the embodiments mentioned, the external signal receiving unit 20 of the light system provided connects with the wall switch 23.

In this embodiment, the driver circuit 30 is capable of setting the operation mode according to the external command inputted by the wall switch is the determined threshold signal or not. More particularly, the operation mode includes the manual switching mode and the wall switch switching mode. When the external command is the determined threshold signal, the driver circuit 30 automatically switches to the wall switch switching mode. Then, the light style of the light source module 40 is capable of being switched through the wall switch 23. The light style includes the color temperature, the light passing and the light beam angle. For instance, once the wall switch is pressed, the driver circuit 30 receives the instruction and orderly switches the color temperature, the light passing or the light beam angle according to the determined switching order. Also, the brightness is capable of being adjusted by the dimmer while the light style is adjusted.

Further, the wall switch 23 is also capable of being the display screen or the control device receiving the instruction sent by mobile phones. The parameter being corresponding to the light style is capable of being set on the display screen or the mobile phones. Further, the light style control signal is capable of being sent to the external signal receiving unit 20.

Please refer to Fig. 6. The light system further has a dimmer 24. The dimmer 24 connects with the driver circuit 30 and is used for adjusting the brightness of the light source module 40 according to the assigned instructions.

In an embodiment, the light system further has a remote control. The remote control is used for sending the wireless control signal to the lighting apparatus according to the assigned instructions.

The lighting apparatus and the light system provided adopt the light style mode switching module producing the light style switching signal according to the instructions and the external signal receiving unit receiving and transferring the light style control signal. The driver circuit is capable of producing the corresponding light driving signal according to the light style control signal and the light style switching signal to adjust the light style of the light source module. Therefore, the complicated operation and safe concern of the present light body setting optional touch spots to adjust the light style are solved.

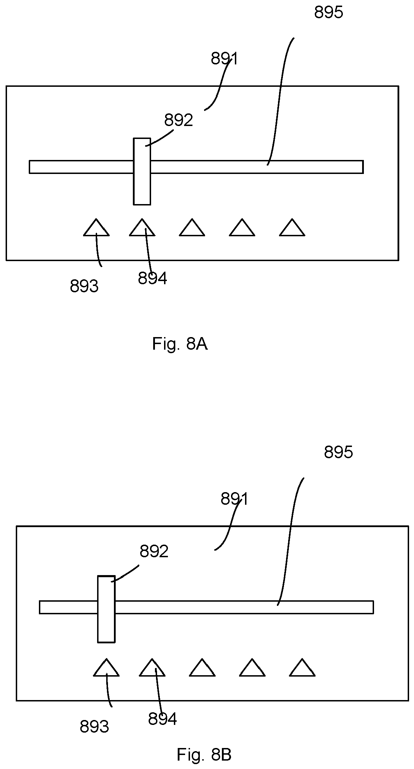

In Fig. 8A and Fig. 8B, a light style switch 895 is disposed on a surface of a housing 891 of a lighting apparatus. There are multiple options 893, 894 to be selected by sliding the lever 892 of the light style switch 895 to the potions corresponding to different options 893, 894. Fig. 8A shows a first option 894 is selected and Fig. 8B shows a second option 892 is selected.

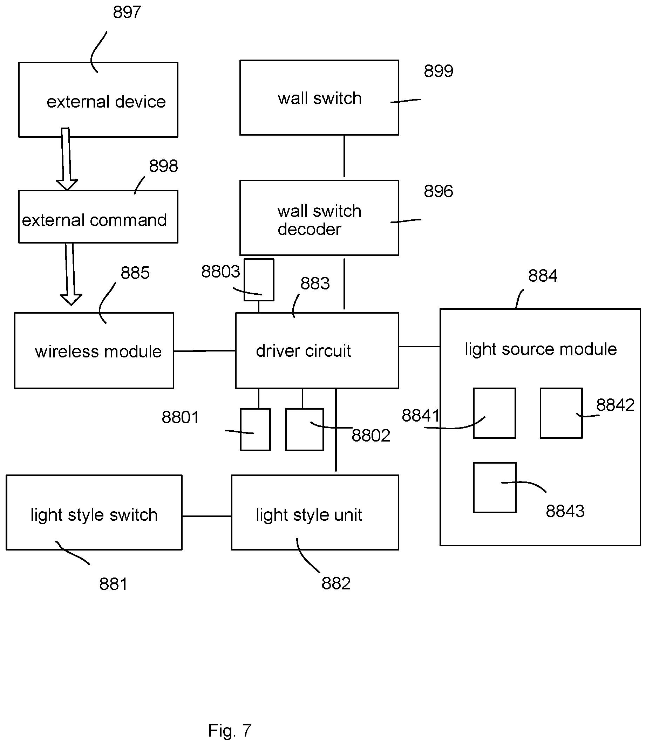

In Fig. 7, a lighting apparatus includes a light source module 884, a light style switch 881, a driver circuit 883 and a light style unit 882.

The light source module 884 has multiple types of LED modules 8841, 8842, 8843. Each type of LED modules may have different number of LED modules. The difference among types of LED modules include color temperatures, colors, luminance levels, light beam angle, color rendering indices, and/or other parameters. There are various ways to arrange different types of LED modules, e.g. as alternating pattern among different types or joining LED modules of the same type as a group placed together. Such LED modules may be placed on a substrate, which may be rigid or flexible material, transparent or light prevention material.

By controlling luminance levels of different types of LED modules, various mixed parameters may be provided when the driver circuit controls the light source module according to the parameters of the type parameters of the LED modules.

The light style switch is used for selecting from a set of predetermined light styles. Each predetermined light style corresponds to multiple parameters of an output light to be generated by the light source.

The light style unit is connected to the light style switch for providing the multiple parameters corresponding to the selected predetermined light style to the driver circuit to generate a corresponding control signal to control the light source.

For example, the multiple parameters of the selected light style in the morning are different from the multiple parameters in the afternoon or night, even the parameters are corresponding to the same selected light style.

In Fig. 8A, the lighting apparatus may also include a housing 891 for enclosing the light source, the driver circuit and the light style unit, a surface of the housing 891 is used for disposing the light style switch 895 with multiple options 893, 894 manually selectable by a user, each option being associated to one predetermined light style.

In some embodiments, there is no other option for light style selection on the housing except the light style switch.

In Fig. 7, the lighting apparatus may also include a wireless module 885 for receiving an external command 898, wherein the external command 898 correspond to one of the predetermined light styles, the driver circuit 883 suppresses the manually selected predetermined light style from the light style switch 881 and uses the predetermined light style indicated by the external command 898 to control the light source module 884.

In Fig. 7, the lighting apparatus may also include a wall switch decoder 896 for decoding an operation from a wall switch 889 connecting to the lighting apparatus.

In some embodiments, the operation of the wall switch provides wall switch parameters overlapping the multiple parameters of the selected predetermined light style.

In some embodiments, the operation of the wall switch provides wall switch parameters for reference on adjusting the multiple parameters of the selected predetermined light style.

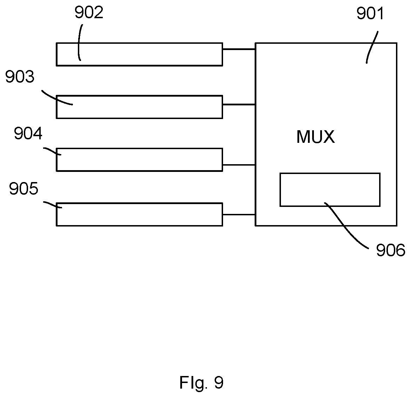

In Fig. 9, the lighting apparatus may also include a multiplexer (MUX) 901 for receiving multiple control sources 902, 903, 904, 905, wherein one of the multiple control sources 902, 903, 904, 905 is a selection for the light style switch.

In Fig. 9, a priority list 906 for the multiple control sources 902, 903, 904, 905 is configured for determining how to use parameters corresponding to the multiple control sources.

In some embodiments, one option of the light style switch is used for mapping other options of the light style switch to different parameters.

In Fig. 7, there is a light indicator 8801 showing a selected option of the light style switch.

In some embodiments, the multiple parameters include a color rendering index, a light beam angle, a color temperature, a color and a luminance level.

In some embodiments, an external device sends an external command with new parameters for replacing the multiple parameters of the selected option of the light style switch.

In some embodiments, the lighting apparatus may also include a wireless module for transmitting the multiple parameters of the selected light style to a neighboring lighting apparatus.

In some embodiments, the driver circuit updates the multiple parameters of the selected light style according to an external command with new parameters and stores updated multiple parameters of the light style in future use.

In some embodiments, the set of predetermined light style correspond to different types of objects to be projected. For example, unlike normal options for different color temperatures or colors, different types of objects to be projected by the lighting apparatus correspond to optimized parameters by professional persons are listed and selected by users. This is particularly helpful on shopping mall, supermarkets, where the lighting requirements change often, and it is very helpful to provide such function while most people do not know how to optimize light for different types of objects. This is different from color rendering index. The concept mentioned here involves a set of parameters, which may include more than color rendering index parameter but also color, color temperatures etc.

In some embodiments, the lighting apparatus may also include a light detector 8802 for detecting an environment parameter and uses the environment parameter to adjust the multiple parameters of the selected light style.

In some embodiments, the multiple parameters of the selected light style are adjusted according to a current time.

For example, the multiple parameters of the selected light style in the morning are different from the multiple parameters in the afternoon or night, even the parameters are corresponding to the same selected light style.

In some embodiments, the multiple parameters of the selected light style are adjusted according a detected user identity.

In Fig. 7, where the driver circuit includes a user detector 8803, if the user detector 8803 finds that a user is not nearby, less used LED modules are turned on to replace the more often used LED modules to increase an overall life span of the light source module. Such user detector may be a NFC detector, a wireless detector, or any other identity sensor.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings.

The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

## Claims

1. A lighting apparatus, comprising:
a light source module (884) with multiple types of LED modules;
a light style switch (881) configured for selecting a light style from a set of predetermined light styles, wherein each predetermined light style corresponds to multiple parameters of an output light to be generated by the light source module (884) ;
a driver circuit (883); and
a light style unit (882) connected to the light style switch (881) and configured for providing the multiple parameters corresponding to the selected predetermined light style to the driver circuit (883) to generate a corresponding control signal to control the light source module (884),
**characterized in that** the driver circuit (883) comprises a user detector (8803), wherein if the user detector (8803) finds that a user is not nearby, less used LED modules of the multiple types of LED modules are turned on to replace more often used LED modules of the multiple types of LED modules to increase an overall life span of the light source module.

2. The lighting apparatus of claim 1, further comprising a housing (891) configured for enclosing the light source module (884), the driver circuit (883) and the light style unit (882), wherein a surface of the housing (891) is used for disposing the light style switch with multiple options manually selectable by a user, each option being associated to one predetermined light style.

3. The lighting apparatus of any one of claims 1 to 2, further comprising a wireless module (885) configured for receiving an external command (898), wherein the external command (898) corresponds to one of the predetermined light styles, the driver circuit (883) suppresses the selected light style selected from the light style switch (881) and uses a parameter set indicated by the external command (898) to control the light source module (884).

4. The lighting apparatus of any one of claims 1 to 3, further comprising a wall switch decoder (896) configured for decoding an operation from a wall switch (889) connecting to the lighting apparatus.

5. The lighting apparatus of any one of claims 1 to 4, further comprising a multiplexer (901) configured for receiving multiple control sources (902, 903, 904, 905), wherein one of the multiple control sources (902, 903, 904, 905) is a selection for the light style switch (881).

6. The lighting apparatus of any one of claims 1 to 5, wherein there is a light indicator (8801) showing a selected option of the light style switch.

7. The lighting apparatus of any one of claims 1 to 6, wherein the multiple parameters include a color rendering index, a light beam angle, a color temperature, a color and a luminance level.

8. The lighting apparatus of claim 6, wherein an external device sends an external command (898) with new parameters for replacing the multiple parameters of the selected option of the light style switch (881).

9. The lighting apparatus of any one of claims 1 to 8, further comprising a wireless module configured for transmitting the multiple parameters of the selected light style to a neighboring lighting apparatus.

10. The lighting apparatus of any one of claims 1 to 9, wherein the driver circuit (883) updates the multiple parameters of the selected light style according to an external command (898) with new parameters and stores updated multiple parameters of the light style in future use.

11. The lighting apparatus of any one of claims 1 to 10, wherein the set of predetermined light style correspond to different types of objects to be projected.

12. The lighting apparatus of any one of claims 1 to 11, further comprising a light detector (8802) configured for detecting an environment parameter and using the environment parameter to adjust the multiple parameters of the selected light style.

13. The lighting apparatus of any one of claims 1 to 12, wherein the multiple parameters of the selected light style are adjusted according to a current time or a detected user identity.

## Patentansprüche

1. Beleuchtungsvorrichtung, die Folgendes umfasst:
ein Lichtquellenmodul (884) mit mehreren Typen von LED-Modulen;
einen Lichtstilschalter (881), der zum Auswählen eines Lichtstils aus einem Satz vorbestimmter Lichtstile konfiguriert ist, wobei jeder vorbestimmte Lichtstil mehreren Parametern eines von dem Lichtquellenmodul (884) zu erzeugenden Ausgangslichts entspricht;
eine Treiberschaltung (883); und
eine Lichtstileinheit (882), die mit dem Lichtstilschalter (881) verbunden und so konfiguriert ist, dass sie die mehreren Parameter, die dem ausgewählten vorbestimmten Lichtstil entsprechen, an die Treiberschaltung (883) liefert, um ein entsprechendes Steuersignal zur Steuerung des Lichtquellenmoduls (884) zu erzeugen,
**dadurch gekennzeichnet, dass** die Treiberschaltung (883) einen Benutzerdetektor (8803) umfasst, wobei, wenn der Benutzerdetektor (8803) feststellt, dass ein Benutzer nicht in der Nähe ist, weniger benutzte LED-Module der mehreren Typen von LED-Modulen eingeschaltet werden, um häufiger benutzte LED-Module der mehreren Typen von LED-Modulen zu ersetzen, um eine Gesamtlebensdauer des Lichtquellenmoduls zu erhöhen.

2. Beleuchtungsvorrichtung nach Anspruch 1, die ferner ein Gehäuse (891) umfasst, das so konfiguriert ist, dass es das Lichtquellenmodul (884), die Treiberschaltung (883) und die Lichtstileinheit (882) umschließt, wobei eine Oberfläche des Gehäuses (891) dazu dient, den Lichtstilschalter mit mehreren von einem Benutzer manuell auswählbaren Optionen anzuordnen, wobei jede Option einem vorbestimmten Lichtstil zugeordnet ist.

3. Beleuchtungsvorrichtung nach einem der Ansprüche 1 bis 2, die ferner ein drahtloses Modul (885) umfasst, das für den Empfang eines externen Befehls (898) konfiguriert ist,
wobei der externe Befehl (898) einem der vorbestimmten Lichtstile entspricht, die Treiberschaltung (883) den vom Lichtstilschalter (881) ausgewählten Lichtstil unterdrückt und einen durch den externen Befehl (898) angegebenen Parametersatz verwendet, um das Lichtquellenmodul (884) zu steuern.

4. Beleuchtungsvorrichtung nach einem der Ansprüche 1 bis 3, des Weiteren mit einem Wandschalterdecoder (896), der so konfiguriert ist, dass er einen Betrieb von einem Wandschalter (889), der mit der Beleuchtungsvorrichtung verbunden ist, dekodiert.

5. Beleuchtungsvorrichtung nach einem der Ansprüche 1 bis 4, die ferner einen Multiplexer (901) umfasst, der so konfiguriert ist, dass er mehrere Steuerquellen (902, 903, 904, 905) empfängt, wobei eine der mehreren Steuerquellen (902, 903, 904, 905) eine Auswahl für den Lichtstilschalter (881) ist.

6. Beleuchtungsvorrichtung nach einem der Ansprüche 1 bis 5, wobei eine Lichtanzeige (8801) vorhanden ist, die eine ausgewählte Option des Lichtstilschalters anzeigt.

7. Beleuchtungsvorrichtung nach einem der Ansprüche 1 bis 6, wobei die mehreren Parameter einen Farbwiedergabeindex, einen Lichtstrahlwinkel, eine Farbtemperatur, eine Farbe und einen Leuchtdichtepegel aufweisen.

8. Beleuchtungsvorrichtung nach Anspruch 6, wobei ein externes Gerät einen externen Befehl (898) mit neuen Parametern zum Ersetzen der mehreren Parameter der ausgewählten Option des Lichtstilschalters (881) sendet.

9. Beleuchtungsvorrichtung nach einem der Ansprüche 1 bis 8, die ferner ein drahtloses Modul umfasst, das so konfiguriert ist, dass es die mehreren Parameter des ausgewählten Lichtstils an eine benachbarte Beleuchtungsvorrichtung überträgt.

10. Beleuchtungsvorrichtung nach einem der Ansprüche 1 bis 9, wobei die Treiberschaltung (883) die mehreren Parameter des ausgewählten Lichtstils gemäß einem externen Befehl (898) mit neuen Parametern aktualisiert und die aktualisierten mehreren Parameter des Lichtstils für die zukünftige Verwendung speichert.

11. Beleuchtungsvorrichtung nach einem der Ansprüche 1 bis 10, wobei der Satz von vorbestimmten Lichtstilen verschiedenen Typen von zu projizierenden Objekten entspricht.

12. Beleuchtungsvorrichtung nach einem der Ansprüche 1 bis 11, die ferner einen Lichtdetektor (8802) umfasst, der so konfiguriert ist, dass er einen Umgebungsparameter erfasst und den Umgebungsparameter verwendet, um die mehreren Parameter des ausgewählten Lichtstils anzupassen.

13. Beleuchtungsvorrichtung nach einem der Ansprüche 1 bis 12, wobei die mehreren Parameter des ausgewählten Lichtstils gemäß einer aktuellen Zeit oder einer erfassten Benutzeridentität eingestellt werden.

## Revendications

1. Un appareil d'éclairage, comprenant :
un module (884) formant source de lumière avec plusieurs types de modules de DEL ;
un commutateur (881) de style de lumière configuré pour sélectionner un style de lumière parmi un ensemble de styles de lumière prédéterminés, chaque style de lumière prédéterminé correspondant à une pluralité de paramètres d'une lumière de sortie devant être générée par le module (884) formant source de lumière ;
un circuit pilote (883) ; et
une unité (882) de style de lumière connectée au commutateur (881) de style de lumière et configurée pour fournir au circuit pilote (883) les paramètres de pluralité de paramètres correspondant au style de lumière prédéterminé sélectionné de façon à générer un signal de commande correspondant afin de commander le module (884) formant source de lumière,
**caractérisé en ce que** le circuit pilote (883) comprend un détecteur d'utilisateur (8803), tel que, si le détecteur d'utilisateur (8803) trouve qu'un utilisateur n'est pas à proximité, des modules DEL moins utilisés parmi la pluralité de types de modules DEL sont allumés de façon à remplacer des modules DEL plus souvent utilisés parmi la pluralité de types de modules DEL afin d'augmenter la durée de service globale du module formant source de lumière.

2. L'appareil d'éclairage selon la revendication 1, comprenant en outre un boîtier (891) configuré pour enfermer le module (884) formant source de lumière, le circuit pilote (883) et l'unité (882) de style de lumière, une surface du boîtier (891) étant utilisée pour disposer le commutateur de style d'éclairage avec une pluralité d'options sélectionnables manuellement par un utilisateur, chaque option étant associée à un style d'éclairage prédéterminé.

3. L'appareil d'éclairage selon l'une quelconque des revendications 1 à 2, comprenant en outre un module sans fil (885) configuré pour recevoir une commande externe (898), la commande externe (898) correspondant à l'un des styles de lumière prédéterminés, le circuit pilote (883) supprimant le style de lumière sélectionné qui a été sélectionné à partir du commutateur (881) de style de lumière et utilisant un ensemble de paramètres indiqué par la commande externe (898) pour commander le module (884) formant source de lumière.

4. L'appareil d'éclairage selon l'une quelconque des revendications 1 à 3, comprenant en outre un décodeur d'interrupteur mural (896) configuré pour décoder une opération à partir d'un interrupteur mural (889) se connectant à l'appareil d'éclairage.

5. L'appareil d'éclairage selon l'une quelconque des revendications 1 à 4, comprenant en outre un multiplexeur (901) configuré pour recevoir plusieurs sources de commande (902, 903, 904, 905), une source de commande de la pluralité de sources de commande (902, 903, 904, 905) étant une sélection pour le commutateur (881) de style de lumière.

6. L'appareil d'éclairage selon l'une quelconque des revendications 1 à 5, dans lequel il y a un indicateur lumineux (8801) montrant une option sélectionnée du commutateur de style de lumière.

7. L'appareil d'éclairage selon l'une quelconque des revendications 1 à 6, dans lequel les paramètres de la pluralité de paramètres comprennent un indice de rendu des couleurs, un angle de faisceau lumineux, une température de couleur, une couleur et un niveau de luminance.

8. L'appareil d'éclairage selon la revendication 6, dans lequel un dispositif externe envoie une commande externe (898) avec de nouveaux paramètres pour remplacer les paramètres faisant partie de la pluralité de paramètres de l'option sélectionnée du commutateur (881) de style de lumière.

9. L'appareil d'éclairage selon l'une quelconque des revendications 1 à 8, comprenant en outre un module sans fil configuré pour transmettre à un appareil d'éclairage voisin les paramètres de la pluralité de paramètres du style de lumière sélectionné.

10. L'appareil d'éclairage selon l'une quelconque des revendications 1 à 9, dans lequel le circuit pilote (883) met à jour les paramètres de la pluralité de paramètres du style de lumière sélectionné selon une commande externe (898) avec de nouveaux paramètres et stocke les paramètres de la pluralité de paramètres mis à jour du style de lumière dans une utilisation future.

11. L'appareil d'éclairage selon l'une quelconque des revendications 1 à 10, dans lequel l'ensemble de styles de lumière prédéterminés correspond à différents types d'objets à projeter.

12. L'appareil d'éclairage selon l'une quelconque des revendications 1 à 11, comprenant en outre un détecteur de lumière (8802) configuré pour détecter un paramètre d'environnement et utiliser le paramètre d'environnement pour régler les paramètres de la pluralité de paramètres du style de lumière sélectionné.

13. L'appareil d'éclairage selon l'une quelconque des revendications 1 à 12, dans lequel les paramètres de la pluralité de paramètres du style d'éclairage sélectionné sont réglés en fonction d'une heure actuelle ou d'une identité d'utilisateur détectée.
